# EUROPEAN PATENT SPECIFICATION

(11) **EP 2 074 012 B1**
(45) Date of publication and mention of the grant of the patent: **25.07.2012**
(21) Application number: 07785755.5
(22) Date of filing: 30.08.2007
(51) Int. Cl.: B62J 1/28, B62M 6/90

(54) **BATTERY SEAT**
BATTERIESITZ
SIÈGE À BATTERIE

(30) Priority: 03.10.2006 DK 200601277; 31.10.2006 DK 200601408
(43) Date of publication of application: 01.07.2009
(73) Proprietor: Protanium B.V., 7327 AB Apeldoorn (NL)
(72) Inventor: MUNKSØ, Lars, 8600 Silkeborg (DK)
(74) Representative: Nielsen, Leif
(86) International application number: PCT/DK2007/000391
(87) International publication number: WO 2008/040346

(56) References cited:
- WO-A1-2007/079626
- CN-A- 1 594 007
- DE-U1- 9 112 481
- JP-A- 10 278 862
- US-A1- 2004 183 343

## Description

### Field of the Invention

The present invention concerns a battery system including at least one battery unit for storing electric energy for use in connection with equipment, such as comfort equipment and/or safety equipment on a vehicle, preferably on a bicycle, as well as a bicycle with such a battery system.

### Description of Prior Art

It is commonly known to use the battery system in bicycles and other vehicles. There are variants where energy is supplied to the battery system during the driving via a dynamo or generator, whereby the battery system is charged. From bicycles it is i.a. known with the old solution with a dynamo producing current for one or more lamps, but this solution has the drawback that there is power for the lamps only when cycling. For many years until now, battery lamps have been used primarily, and little by little new combination products have come on the market where dynamo, battery and lamps are used together.

Another product finding its way to the market is bicycles with electric auxiliary motors. These bicycles are provided with an electric motor aiding the cyclist so that less muscular power is to be used for treading the pedals of the bicycle. These bicycles are typically provided with battery systems made up of one or more battery units which may be disposed at various points on the bicycle. This type of bicycles is not new but has existed for a number of years, but due to the weight and capacity of batteries bicycles with auxiliary motors have not been particularly attractive as a substitution for a common bicycle. Modem battery technology has, however, made it more attractive than previously, but the fact is still that relatively large and cumbersome battery units are to be provided on something which reminds of a usual bicycle.

That a bicycle with an electric auxiliary motor is not essentially different in design from a common bicycle has appeared to be a great wish on the part of the consumers, who want a discreet and auxiliary motor equipped bicycle without substantially increasing the weight of it.

In order to meet the consumers' desire for a discreet solution, there are innumerable variants where the battery unit or packages are disposed integrated in the frame, either in compartments adapted for the battery units or directly as a frame part which possibly can be dismounted for charging or replacement. As bicycles are often parked at train stations and on the street, it is furthermore important that the battery unit can be readily dismounted and carried by the consumer, as it otherwise may easily be removed from the bicycle without the consent of the user, or for charging when the user is not using the bicycle.

Examples of known battery systems can be seen in Chinese Patent Publication No. CN 1 594 007 which discloses a battery system according to the preamble of claim 1, A and Japanese Patent Publication No. JP 10 278862 A. These prior art systems show battery units provided at the seat of a bicycle, which involved relatively complicated installation and removal operations.

It is the purpose of a battery system according to the invention to indicate a battery unit which is light, discreet and which may easily be dismounted for charging or for preventing theft, and which may advantageously be used on a vehicle, preferably a bicycle.

### Description of the Invention

A battery system according to the invention includes, as mentioned previously, at least one battery unit for storing electric energy for use in connection with equipment, such as comfort equipment and/or safety equipment on a vehicle, preferably on a bicycle. The new feature of a battery unit according to the invention is that the exterior of the battery unit is shaped as a seat, preferably a bicycle seat, where the battery unit at least comprises a number of interconnected battery cells, at least one terminal for connecting to equipment and/or charging the battery, and where the battery unit includes at least one outer casing which constitutes the surface of the seat.

By such a seat there is achieved a discreet solution to placing a battery unit on a bicycle, and at the same time is achieved possibility of having a battery unit with suitable size without having to mount large and cumbersome battery units at different places on the bicycle. If a seat of the same slender design as the prior art types can accommodate a sufficient number of battery cells, then the seat can readily be shaped so that it takes up a little more space at the bottom side, implying the possibility of increased capacity of the battery unit.

A preferred variant of a battery system according to the invention includes at least one battery unit, furthermore including a saddle post, where at least one terminal is arranged in the saddle post, and where connection of the battery unit occurs by mounting the saddle post on a bicycle. In the frame of the bicycle, a corresponding terminal is provided, and by placing the saddle post in the frame of the bicycle, the battery unit is connected with the electric system of the bicycle in a simple and easy way.

An embodiment of a battery unit according to the invention includes a saddle post that may be folded in longitudinal direction of the seat. The saddle post may thus be folded in under the seat when this is dismounted for transportation or charging.

According to the invention the at least one terminal of the battery unit is arranged in the joint between seat and saddle post. This solution also provides a simple connection between seat/battery unit and the electric system of the bicycle.

In another variant according to the invention the battery unit is inserted in a slot or a drawer in the seat or underneath the cover of the seat preferably in the rear end of the seat. I principle this can be arranged like a drawer in a CD player or the like, that opens by pushing a button, but the simple version is of cause a slot suitable for receiving the battery unit like known from e.g. a power drill with accumulator.

One way of mounting a battery system including at least one battery unit according to the invention on a vehicle, preferably a bicycle, is by a quick-action fastening device for easy mounting and dismounting. With such a type of fastening device there is achieved the clear advantage that the battery unit may readily be loosened and fastened without using tools.

A particular version of a battery unit according to the invention is with a carrying handle. This provides the user the possibility of transporting the battery unit for charging or just preventing that it may be stolen while the bicycle is standing parked.

A preferred variant according to the invention is where the battery system includes a battery unit with battery cells of lithium polymer. This type of battery cells is, as the name indicates, made of inter alia polymers and can be formed into innumerable shapes. Lithium polymer battery cells have a capacity of up to three times the capacity of nickel-cadmium battery cells and have a very low degree of self-discharging. Since lithium polymer battery cells are very small and contained in a polymer electrolyte, they may be shaped as e.g. a seat for a bicycle, and since the lithium battery cells can be formed with an electrolyte which is jelly-like, such a battery unit can be designed as a bicycle seat which is soft and comfortable to sit on.

A battery system including at least one battery unit according to the invention may further include a battery charger which is adapted to charging a battery unit with energy from a source of energy. This charging may occur directly from the power network by connecting to a power socket in a house or similar. Charging may also occur via a transformer or in other suited ways. Charging may either occur via the previously described terminal on the battery unit or via another terminal intended for charging the battery unit.

An alternative design of a battery charger for charging a battery unit according to the invention is where energy is supplied via solar cells. The solar cells may be arranged at suitable points on the surface of the bicycle and may alternatively be mounted on the seat surface or incorporated under a transparent outer layer on the seat. With this solution, energy may easily and unencumbered be supplied to the battery unit right away.

A further embodiment of a battery charger is a solar panel which may either be permanently coupled to the battery unit or coupled via a terminal on the bicycle or the battery unit, and which may be unfolded and provided as a seat cover on the bicycle, on the luggage carrier or as a cover entirely or partly covering the whole bicycle as a kind of "bicycle garage" or similar. When the solar panel is not in use, it may e.g. be stored in the folded condition under the seat or in another suitable place on the bicycle. With such a solar panel there is possibility of obtaining a large yield of solar energy and thereby a shorter charging time.

The invention also concerns a bicycle with a battery system, the battery system including at least one battery unit, where the bicycle is a pedal-powered bicycle with or without auxiliary motor, where a battery unit is integrated in the seat of the bicycle. In a variant of the bicycle, it has a seat and a locking mechanism that are interacting so that the seat is loosened for dismounting by activating the lock of the bicycle and/or the lock of the bicycle is activated by dismounting the seat of the bicycle. In this way, it is more easily remembered to remove the seat, alternatively locking the bicycle, when the latter is left on the street, at the train station or similar places. This embodiment provides the possibility of a secure and preventive protection of a bicycle as well as seat/battery unit.

### Short Description of the Drawing

The invention is described in more detail with reference to the drawing, where:
- Fig. 1: shows a bicycle seat on a bicycle;
- Fig. 2: shows a bicycle seat with handle and saddle post with terminal folded up.

### Detailed description of the invention

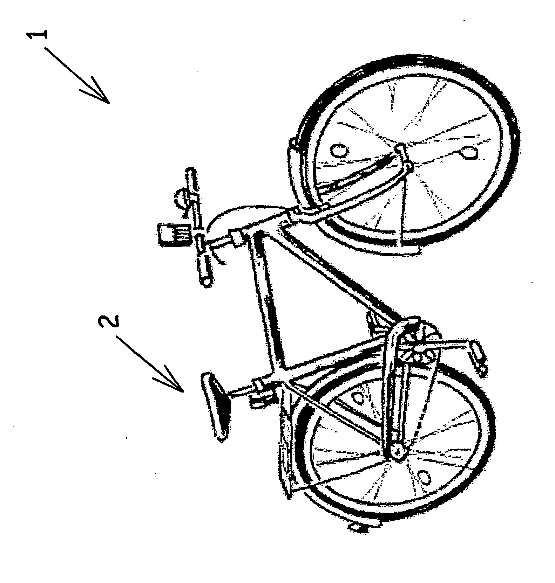

In Fig. 1 appears a bicycle 1 with a seat 2, where the seat 2 contains a battery unit from which e.g. comfort equipment and safety equipment on the bicycle 1 can be provided entirely or partly with electric energy. Comfort equipment may e.g. be heating in the handle of the handlebar or in the seat 2, but may also be an auxiliary electric motor relieving the user of the bicycle 1. Safety equipment includes front light, rear light and possibly stop light or other marking lights.

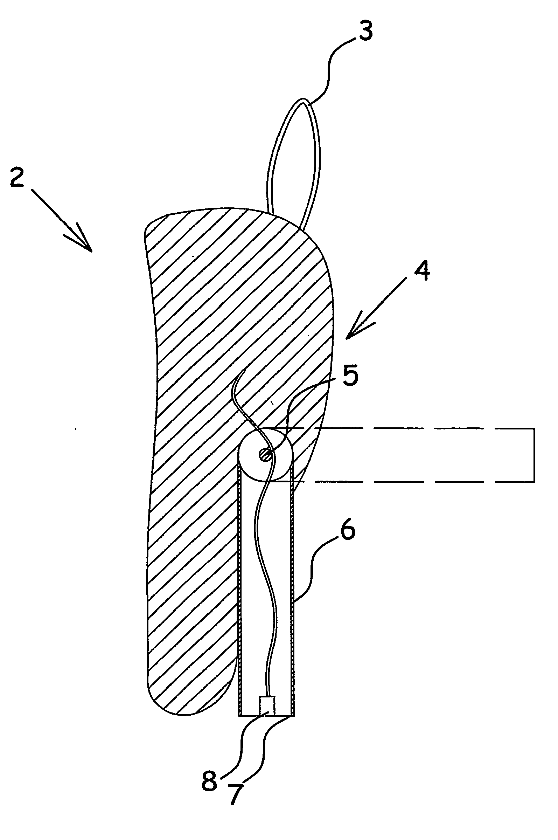

In Fig. 2 appears a seat 2 for a bicycle 1, where the seat 2 has a carrying handle 3 for use during transport of the seat/battery unit 2. At the bottom side 4, the seat 2 has a fixture 5 which can rotate about an axis so that the saddle post 6 can be folded up under the seat 2 when the latter is not mounted on the bicycle 1. At one end 7, the saddle post 6 is provided with a terminal 8 for connecting to a not shown corresponding terminal in the frame of the bicycle. The terminal in bicycle frame can be arranged so that when mounting the seat 1 the saddle post 6 is brought into contact with the terminal 8 on the saddle post 6 and subsequently pressed down in a resilient way into the frame of the bicycle 1 so that the seat height on the bicycle can be adjusted according to desire and need.

Alternatively, the battery unit 2 and the bicycle 1 can be with terminals constituted by one or more wires with terminals that are joined.

## Claims

1. A battery system including at least one battery unit for storing electric energy for use in connection with equipment, such as comfort equipment and/or safety equipment on a vehicle (1), preferably on a bicycle, where the exterior of the battery unit is shaped as a seat (2), preferably a bicycle seat, where the battery unit at least comprises a number of interconnected battery cells, at least one terminal (8) for connecting to equipment and/or charging the battery, and where the battery unit includes at least one outer casing which constitutes the surface of the seat, **characterised in that** the at least one terminal (8) of the battery unit is arranged in the joint between seat and saddle post (6).

2. A battery system including at least one battery unit according to claim 1, **characterised in that** the battery unit includes a saddle post, where at least one terminal is arranged in the saddle post, and where connection of the battery unit occurs by mounting the saddle post on a bicycle.

3. A battery system including at least one battery unit according to any of claims 1 - 2, **characterised in that** the battery unit includes a saddle post that may be folded in longitudinal direction of the seat.

4. A battery system including at least one battery unit according to any of claims 1 - 3, **characterised in that** the battery unit is inserted in a slot or a drawer in the seat preferably in the rear end of the seat.

5. A battery system including at least one battery unit according to any of claims 1 - 4, **characterised in that** the battery unit is mounted on a vehicle, preferably a bicycle, with a quick-action fastening device for easy mounting and dismounting.

6. A battery system including at least one battery unit according to any of claims 1 - 5, **characterised in that** the battery unit is provided with a carrying handle (3).

7. A battery system including at least one battery unit according to any of claims 1 - 6, **characterised in that** the battery unit is provided with battery cells of lithium polymer type.

8. A battery system including at least one battery unit according to any of claims 1 - 7, **characterised in that** the battery system further includes a battery charger which is adapted to charging a battery unit with energy from a source of energy.

9. A battery system including at least one battery unit according to any of claims 1 - 8, **characterised in that** the battery system further includes a battery charger which is adapted to charging a battery unit with energy from solar cells, where the solar cells are disposed on or in connection with the bicycle.

10. A bicycle with a battery system including at least one battery unit preferably according to any preceding claim, **characterised in that** the bicycle is a pedal-powered bicycle with or without auxiliary motor comprising a battery system according to claim 1.

## Patentansprüche

1. Batteriesystem, umfassend wenigstens eine Batterieeinheit zum Speichern elektrischer Energie zur Verwendung in Verbindung mit Ausstattung, sowie Komfortausstattung und/oder Sicherheitsausstattung, eines Fahrzeuges (1), vorzugsweise eines Fahrrads, wobei das Äussere der Batterieeinheit als ein Sitz (2) gestaltet ist, vorzugsweise ein Fahrradsattel, wobei die Batterieeinheit wenigstens eine Vielzahl von gegenseitig verbundenen Batteriezellen aufweist, wenigstens einen Anschlusspunkt (8) zum Anschluss der Ausstattung und/oder zum Aufladen der Batterie, und wobei die Batterieeinheit wenigstens ein die Sitzoberfläche gestaltendes, äusseres Gehäuse umfasst, **dadurch gekennzeichnet, dass** der wenigstens eine Pol (8) der Batterieeinheit in der Verbindungsstelle zwischen Sitz und Sattelstütze (6) angeordnet ist.

2. Batteriesystem umfassend wenigstens eine Batterieeinheit nach Anspruch 1, **dadurch gekennzeichnet, dass** die Batterieeinheit eine Sattelstütze umfasst, wobei wenigstens ein Pol in der Sattelstütze angeordnet ist, und wobei die Batterieeinheit durchs Aufsetzen der Sattelstütze auf das Fahrrad verbunden wird.

3. Batteriesystem umfassend wenigstens eine Batterieeinheit nach irgendeinem der Ansprüche 1-2, **dadurch gekennzeichnet, dass** die Batterieeinheit eine in der Längsrichtung des Sitzes faltbare Sattelstütze umfasst.

4. Batteriesystem umfassend wenigstens eine Batterieeinheit nach irgendeinem der Ansprüche 1-3, **dadurch gekennzeichnet, dass** die Batterieeinheit in einem Schlitz oder einer Schublade im Sitz, bevorzugt im hinteren Sitzende, angeordnet ist.

5. Batteriesystem umfassend wenigstens eine Batterieeinheit nach irgendeinem der Ansprüche 1-4, **dadurch gekennzeichnet, dass** die Batterieeinheit auf einem Fahrzeug, vorzugsweise einem Fahrrad, mit einer Schnellbefestigung zum einfachen Aufsetzen und Abnehmen angeordnet ist.

6. Batteriesystem umfassend wenigstens eine Batterieeinheit nach irgendeinem der Ansprüche 1-5, **dadurch gekennzeichnet, dass** die Batterieeinheit mit einem Tragegriff (3) versehen ist.

7. Batteriesystem umfassend wenigstens eine Batterieeinheit nach irgendeinem der Ansprüche 1-6, **dadurch gekennzeichnet, dass** die Batterieeinheit mit Batteriezellen vom Lithium-Polymer-Typ versehen ist.

8. Batteriesystem umfassend wenigstens eine Batterieeinheit nach irgendeinem der Ansprüche 1-7, **dadurch gekennzeichnet, dass** das Batteriesystem ferner ein Batterie-Ladegerät zum Aufladen der Batterieeinheit mit Energie aus einer Energiequelle aufweist.

9. Batteriesystem umfassend wenigstens eine Batterieeinheit nach irgendeinem der Ansprüche 1-8, **dadurch gekennzeichnet, dass** das Batteriesystem ferner ein Batterie-Ladegerät zum Aufladen einer Batterieeinheit mit Energie aus Solarzellen aufweist, wobei die Solarzellen auf oder in Verbindung mit dem Fahrrad angeordnet sind.

10. Fahrrad mit einem Batteriesystem umfassend wenigstens eine Batterieeinheit, bevorzugt nach irgendeinem der vorhergehenden Ansprüche, **dadurch gekennzeichnet, dass** das Fahrrad ein pedalgetriebenes Fahrrad mit einem oder ohne einen, ein Batteriesystem nach Anspruch 1 aufweisenden Hilfsmotor ist.

## Revendications

1. Système de batterie comprenant au moins une unité de batterie pour stocker de l'énergie électrique à l'usage d'un équipement, comme par exemple un équipement de confort et/ou équipement de sécurité d'un véhicule (1), de préférence sur une bicyclette, l'extérieur de l'unité de batterie étant formé comme un siège (2), de préférence une selle de bicyclette, l'unité de batterie comprenant au moins un nombre de cellules de batterie interconnectées, au moins un terminal (8) pour connecter à l'equipement et/ou charger la batterie, et l'unité de batterie comprenant au moins un boîtier extérieur qui constitue la surface de la selle, **caractérisé en ce que** le au moins un terminal (8) de l'unité de batterie est arrangé dans le joint entre la selle et la tige de selle (6).

2. Système de batterie comportant au moins une unité de batterie selon la revendication 1, **caractérisé en ce que** l'unité de batterie comprend une tige de selle, où au moins un terminal est arrangé dans la tige de selle, et où la connexion de la batterie s'effectue en montant la tige de selle sur une bicyclette.

3. Système de batterie comportant au moins une unité de batterie selon l'une quelconque des revendications 1-2, **caractérisé en ce que** l'unité de batterie comprend une tige de selle qui peut être pliée dans la direction longitudinale de la selle.

4. Système de batterie comportant au moins une unité de batterie selon l'une quelconque des revendications 1-3, **caractérisé en ce que** l'unité de batterie est insérée dans une rainure ou un tiroir de la selle de préférence dans l'arrière de la selle.

5. Système de batterie comportant au moins une unité de batterie selon l'une quelconque des revendications 1-4, **caractérisé en ce que** l'unité de batterie est montée sur un véhicule, de préférence une bicyclette, avec un dispositif de fixation d'action rapide pour un montage et démontage facile.

6. Système de batterie comportant au moins une unité de batterie selon l'une quelconque des revendications 1-5, **caractérisé en ce que** l'unité de batterie est munie d'une poignée de transport (3).

7. Système de batterie comportant au moins une unité de batterie selon l'une quelconque des revendications 1-6, **caractérisé en ce que** l'unité de batterie est munie de cellules de batterie du type lithium-polymère.

8. Système de batterie comportant au moins une unité de batterie selon l'une quelconque des revendications 1-7, **caractérisé en ce que** le système de batterie en outre comprend un chargeur de batterie qui est adapté à charger une unité de batterie avec de l'énergie d'une source d'énergie.

9. Système de batterie comportant au moins une unité de batterie selon l'une quelconque des revendications 1-8, **caractérisé en ce que** le système de batterie en outre comprend un chargeur de batterie qui est adapté à charger une unité de batterie avec de l'énergie venant de cellules solaires, les cellules solaires étant disposées sur ou en liaison avec la bicyclette.

10. Bicyclette avec un système de batterie comportant au moins une unité de batterie de préférence selon l'une quelconque des revendications précédentes, **caractérisée en ce que** la bicyclette est une bicyclette à pédales avec ou sans moteur auxiliaire comportant un système de batterie selon la revendication 1.
